**Europäisches Patentamt**

**European Patent Office**

**Office européen des brevets**

(11) Veröffentlichungsnummer: **0 430 281 A1**

# EUROPÄISCHE PATENTANMELDUNG

(21) Anmeldenummer: 90122970.8

(51) Int. Cl.⁵: **A01D 34/73**

(22) Anmeldetag: **30.11.90**

(30) Priorität: **01.12.89 CS 6772/89**
**01.12.89 CS 6773/89**

(43) Veröffentlichungstag der Anmeldung:
**05.06.91 Patentblatt 91/23**

(84) Benannte Vertragsstaaten:
**DE FR GB IT Patentblatt 1**

(71) Anmelder: **TRINECKE ZELEZARNY**

**Trinec(CS)**

(72) Erfinder: **Bocek, Jiri**
**Bystrice 1**
**Trinec(CS)**

(74) Vertreter: **Finck, Dieter et al**
**Patentanwälte v. Füner, Ebbinghaus, Finck**
**Mariahilfplatz 2 & 3**
**W-8000 München 90(DE)**

(54) **Messerkopf für einen Rasenmäher.**

(57) Der Messerkopf für den Rasenmäher hat eine die Antriebswelle des Rasenmähers aufnehmende Scheibe 1, in deren rasenseitiger Stirnfläche diametral gegenüberliegende Spannflächen 2 vorgesehen sind, welche entgegengesetzt zueinander jeweils bezüglich der Ebene der rasenseitigen Stirnfläche der Scheibe 1 so geneigt α sind, daß die parallel zu den Spannflächen 2 festgelegten Messerblätter 3 mit ihren Schneiden 7 von der Ebene der mäherseitigen Stirnfläche der Scheibe 1 weiter entfernt liegen als mit ihrem Rücken. Dadurch sind die Messerblätter 3 so geneigt, daß ihre Schneiden 7 der Rasenfläche am nächsten liegen. An ihren radial außen liegenden Enden haben die Messerblätter vom Rasen weggebogene Förderabschnitte 6 mit Durchbrechungen 8. Mit einem solchen Messerkopf lassen sich Messerbeschädigungen beim Auftreffen auf harte Gegenstände, wie Steine, weitgehend verringern. Ferner wird ein einwandfreier Schnitt der Grashalme durch deren Aufrichtung im Luftstrom gewährleistet und ein Abtransport in einen Sammelbehälter problemlos erreicht.

Fig. 1

EP 0 430 281 A1

## MESSERKOPF FÜR EINEN RASENMÄHER

Die Erfindung betrifft einen Messerkopf für einen Rasenmäher mit einer eine rasenseitige und eine mäherseitige Stirnfläche aufweisenden Scheibe, die koaxial mit einer Antriebswelle des Rasenmähers verbindbar ist, deren Achse sich senkrecht zu der mäherseitigen Stirnfläche der Scheibe erstreckt, mit an der rasenseitigen Stirnfläche der Scheibe diametral gegenüberliegend vorgesehenen Spannflächen und wenigstens zwei Messerblättern, von denen jedes eine in Drehrichtung der Scheibe vordere Schneide und einen ihr gegenüberliegenden Rücken aufweist und die mit ihren diametral gegenüberliegenden radial innen befindlichen Enden an den Spannflächen festlegbar sind.

Bei einem solchen bekannten Messerkopf sind die Messerblätter in ein und derselben, zur Messerachse im wesentlichen senkrechten Ebene an der Scheibe festgelegt. Wenn eines der Messerblätter mit einem harten Gegenstand, wie einem Stein, in Berührung kommt, wird es in beträchtlichem Ausmaß beschädigt oder bricht.

Man hat deshalb bereits die Messerblätter an Keilstücken befestigt, die beim Auftreffen eines Messerblatts auf einen harten Gegenstand brechen. Dabei können jedoch Beschädigungen des Messerblatts nicht ausgeschlossen werden. Außerdem ist das Auswechseln der gebrochenen Keilstücke aufwendig. Bekannt ist ferner, die Messerblätter an dem Messerkopf gelenkig zu lagern, damit sie sich beim Auftreffen auf einen harten Gegenstand nicht entgegen der Messerdrehrichtung verschieben können. Eine solche Verschiebung ist jedoch nur in einem begrenzten Bereich möglich. Wird dieser Bereich voll ausgenützt, wirkt der harte Gegenstand voll auf das Messerblatt ein, wodurch dieses beschädigt wird. Wenn bei den Messerblättern der bekannten Messerköpfe derartige Beschädigungen auftreten, kann es auch zu Verletzungen der Bedienungsperson durch Splitter kommen.

Eine weitere Alternative zum Schutz der Messerblätter beim Auftreffen auf Hindernisse besteht darin, die Messerblätter an der Scheibe mit Hilfe einer flachen Feder vertikal verstellbar festzulegen, um über das Hindernis hinweggleiten zu können. Die Messerblätter sind dabei frei drehbar um einen Zapfen gelagert, wobei die Feder die Verstellung längs der Zapfenachse ermöglicht. Wenn im zu mähenden Rasen sehr hohe harte Hindernisse sind, besteht die Gefahr, daß sich die Messerblätter vom Zapfen lösen, was in Folge der hohen Drehzahlen sehr gefährlich sein kann.

Damit das gemähte Gras vom Rasenmäher direkt in einen Sammelbehälter befördert wird, verwendet man Messerblätter mit massiv ausgebildeten Flügeln, die zur Ebene des Messerblatts senkrecht oder unter einem Winkel geneigt angeordnet sind. Der Transport des gemähten Grases und dessen Verdichtung in einem Sammelbehälter hängt dabei vom Verhältnis der Größe der Flügelflächen und der Messerblattfläche ab. Wenn die Flügelfläche zu klein ist, gelangt in den Raum über den Messerblättern zuviel Gras, was die Funktion des Rasenmähers beeinträchtigt. Wird die Flügelfläche zu groß, erfordert dies eine Steigerung der Antriebsleistung und im Hinblick auf das erhöhte Messergewicht eine Auswuchtung des Messerkopfes. Mit derartigen Messerköpfen versehene Rasenmäher sind sehr laut und lassen viel zerkleinertes Grasmaterial am Messerkopf haften. Ferner können solche Rasenmäher in der Nähe von Hindernissen, wie Zäunen, Wänden oder Bäumen nicht mehr eingesetzt werden.

Die der Erfindung zugrunde liegende Aufgabe besteht darin, den Messerkopf der eingangs genannten Art so auszubilden, daß sich unter Beibehaltung der Möglichkeit des Grasabtransports durch die Messerblätter Beschädigungen der Messerblätter beim Auftreffen auf Hindernisse weitgehendst ausschließen lassen, ohne daß die sichere Festlegung der Messerblätter beeinträchtigt wird.

Diese Aufgabe wird ausgehend von dem Messerkopf der eingangs genannten Art dadurch gelöst, daß die diametral gegenüberliegenden Spannflächen entgegengesetzt zueinander jeweils bezüglich der Ebene der mäherseitigen Stirnfläche der Scheibe so geneigt sind, daß die parallel zu den Stirnflächen festgelegten Messerblätter mit ihren Schneiden von der Ebene der mäherseitigen Stirnfläche der Scheibe weiter entfernt liegen als mit ihren Rücken.

Die diametral gegenüberliegenden Spannflächen sind dabei vorteilhafterweise zueinander entgegengesetzt jeweils um einen Winkel von 5 bis 20° zur Ebene der mäherseitigen Stirnfläche der Scheibe geneigt.

Vorteilhafterweise sind in den Spannflächen senkrecht zu ihren Ebenen Gewindebohrungen ausgebildet, in welche sich durch Spannlöcher in den Messerblättern erstreckende Gewindebolzen zur Festlegung der Messerblätter eingeschraubt sind.

Aufgrund der Neigung der Messerblätter entsteht eine Auftriebskraft auf der rasenseitigen Fläche der Messerblätter, wodurch die Grashalme, auch wenn der Rasen niedergetreten ist, aufgerichtet, gespannt und dadurch einwandfrei scharf geschnitten werden, ohne daß Grashalme fasern oder die Oberfläche des Grasteppichs verletzt würde, was zu sichtbaren Trockenstellen führen würde. Durch den Auftrieb wird Luft aus der Umgebungsatmosphäre angesaugt. Dieser Luftstrom zieht auch noch Grashalme in einer Entfernung von 3 bis 4 cm von der Rasenmäherhaube in den Schnittbereich, so daß auch Rasenstücke sehr nahe an Wänden, Bäumen oder Zäunen einwandfrei gemäht werden können. Die Auftriebskraft sorgt außerdem noch für ein Zusammendrücken der mit dem Luftstrom in den Sammelbehälter transportierten Grashalme und ferner zur Beseitigung von flugfähigen Unkrautsamen, von Laub, Papier oder anderen die Rasenoberfläche bedeckenden, zerkleinerbaren Gegenständen. Dadurch entfällt eine Rasenbehandlung mit Herbiziden und Fungiziden zur Vernichtung von Unkrautsamen und dergleichen. Außerdem werden keinerlei Zusatzgeräte zum Absaugen von Verunreinigungen von der Rasenoberfläche benötigt.

Wenn die erfindungsgemäß angeordneten Messerblätter auf einen harten Gegenstand, beispielsweise einen Stein, auftreffen, wird der Rasenmäher über das Niveau des Hindernisses angehoben. Außerdem läßt die Festlegung mit Hilfe des Spiels zwischen Bolzen und Messerblatt ein Verschwenken des Messerblattes zu. Dadurch werden Beschädigungen der Messerblätter weitgehend vermieden. Ebenso besteht keine Verletzungsgefahr für die Bedienungsperson durch Splitter oder Bruchstücke der Messerblätter. Auch bei einem Anheben des Mähers über das Hinderniss wird das Messerblatt fest an der Spannfläche gehalten, es kann sich also nicht lösen. Der Messerkopf hat einen einfachen Aufbau und ein geringes Gewicht. Die Messerblätter sind leicht austauschbar, so daß ein mit dem erfindungsgemäßen Messerkopf versehener Rasenmäher leicht bedienbar und instand zu halten ist.

Wenn die Messerblätter an ihren radial außen liegenden Vorderabschnitten jeweils zwischen ihrer Schneide und ihrem Rücken zur Ebene der mäherseitigen Stirnfläche der Scheibe hin abgebogen sind und wenn die Vorderabschnitte mit einer Vielzahl von Durchbrechungen versehen sind, kann Luft durch diese Durchbrechungen strömen. Dies führt zu einer wesentlichen Reduzierung des Geräuschpegels verglichen mit den bekannten Rasenmähern, nämlich um bis zu 50%. Außerdem ist die Masse der Messerblätter in dem äußeren Bereich der Messerblätter verringert, was Auswuchtprobleme weitgehend reduziert. Aufgrund der Durchbrechungen ergibt sich eine gesteigerte Luftströmung in dem Raum über den Messerblättern, was den Abtransport der geschnittenen Halme von der Schnittkante des Messerblatts und zum Sammelbehälter sowie das Einziehen der Grashalme in den Bereich der rotierenden Messerblätter und das Absaugen von Gegenständen auf der Rasenoberfläche begünstigt.

Zweckmäßigerweise beträgt der Winkel zwischen Messerblatt und Förderabschnitt 110 bis 150°, voprzugsweise 130°.

Mit dem erfindungsgemäßen Messerkopf läßt sich eine hohe Schnittqualität des Rasens mit einheitlicher Höhe gleichzeitig mit einer Befreiung von Unkraut und Verunreinigungen erreichen.

Anhand von Zeichnungen wird ein Ausführungsbeispiel der Erfindung näher erläutert. Es zeigt:

Fig. 1    den Messerkopf in einer Seitenansicht;

Fig. 2    den Schnitt A-A von Fig. 1;

Fig. 3    die Ansicht des Messerkopfs in Richtung des Pfeils B von Fig. 1;

Fig. 4    ein Messerblatt des Messerkopfs in einer Abwicklung;

Fig. 5    das Messerblatt von Fig. 4 in der Seitenansicht und

Fig. 6    den Förderabschnitt des Messerblatts in Richtung des Pfeils C von Fig. 6.

Der in den Zeichnungen gezeigte Messerkopf für einen Rasenmäher weist eine Scheibe 1 mit einer mäherseitigen Stirnfläche und einer rasenseitigen Stirnfläche sowie einer zylindrischen Umfangsfläche und einer axialen Öffnung zum Aufbringen auf die nicht gezeigte Antriebswelle eines Rasenmähers auf. An der rasenseitigen Stirnfläche der Scheibe 1 sind diametral gegenüberliegend zwei Spannflächen 2 ausgebildet, die in Drehrichtung der Scheibe 1 bezogen auf die zueinander parallelen Ebenen der Stirnflächen der Scheibe 1 in entgegengesetzte Richtungen jeweils unter dem gleichen Winkel α von 7° zur Rasenseite hin geneigt sind. Die Schnittlinie der Ebenen der beiden Spannflächen 2 geht durch die vertikale Achse der Scheibe 1 hindurch, die mit der Achse der Antriebswelle zusammenfällt.

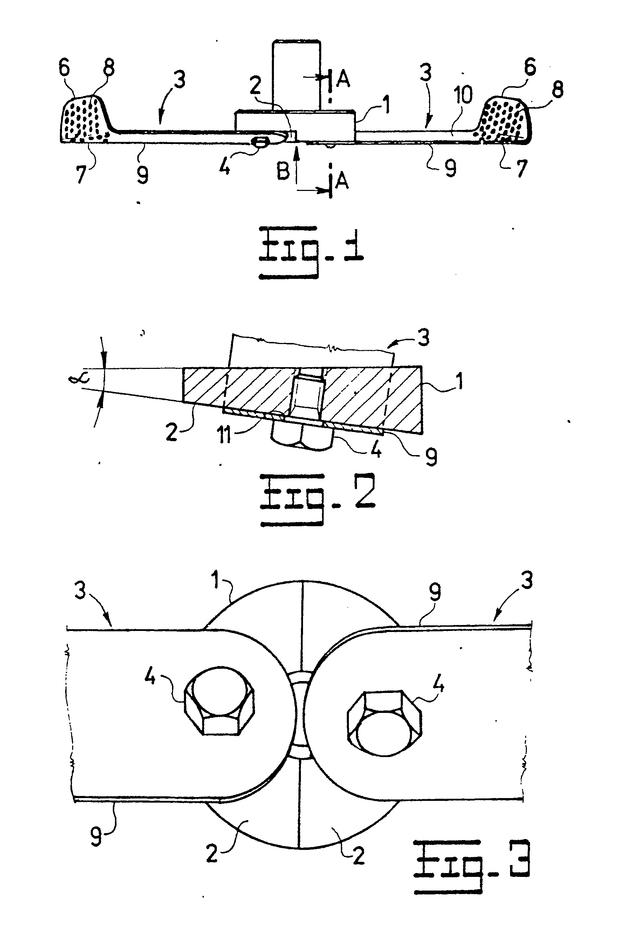

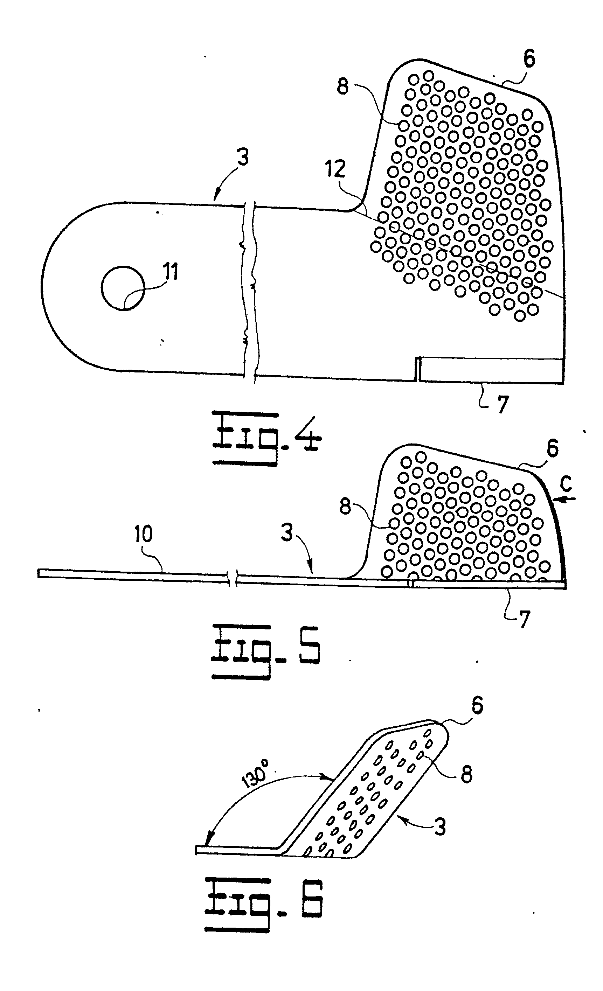

In jeder Spannfläche 2 ist symmetrisch zur vertikalen Achse der Scheibe 1 eine Gewindebohrung vorgesehen, in die ein einen Kopf aufweisenden Bolzen 4 einschraubbar ist. Zwischen dem Kopf und dem Gewindeschaft des Bolzens 4 ist ein Ansatz für die Aufnahme in einem Spannloch 11 eines zugeordneten Messerblatts 3 ausgebildet. Wie aus Fig. 2 zu ersehen ist, erstreckt sich die Gewindebohrung senkrecht zur Spannfläche 2. Das Messerblatt 3 ist auf den Ansatz des Bolzens 4 mit einem eine Messerverschwenkung erlaubenden Spiel aufgesetzt. Das Messerblatt 3, das in Drehrichtung mit einer Schneide versehen ist und auf der der Schneide gegenüberliegenden Seite einen Rücken aufweist, liegt flach auf der zugehörigen Spannfläche 2 auf, so daß seine Schneide 7 dem zu mähenden Rasen am nächsten liegt, also die Schneide 7 eine durch die Neigung der Spannfläche 2 bedingten Abstand von der mäherseitigen Stirnfläche der Scheibe 1 hat, der größer ist als der entsprechende Abstand des Rückens des Messerblatts 3.

Wie in der Zeichnung ferner gezeigt ist, hat jedes Messerblatt 3 einen Schneidenabschnitt 9, der auf den gegenüberliegenden Seiten der Schneiden 7 im radial äußeren Bereich zur mäherseitigen Stirnfläche der Scheibe 1 hin nach oben gebogene Förderabschnitte 6 aufweist, in denen insbesondere oberhalb der Oberseite 10 der Schneidabschnitte 9 eine Vielzahl von Durchbrechungen 8 vorgesehen ist, bei dem gezeigten Ausführungsbeispiel jeweils mit einem Durchmesser 3 mm. Die Fläche jedes Förderabschnitts 6 ist zu der Oberseite 10 des Schneidenabschnitts 9 des Messerblatts 3 symmetrisch zu einer Biegeachse 12 unter einem Winkel von 130° geneigt.

Wenn der Rasenmäher in Betrieb genommen ist und sich der Messerkopf dreht, sind die Schneiden 7 der Messerblätter 3 aufgrund der Zentrifugalkraft parallel zu dem zu mähenden Rasen ausgerichtet, wobei jedoch die Messerblattfläche in Mährichtung zur Rasenoberfläche unter dem Winkel α von 7° geneigt ist, den die Spannflächen 2 mit der mäherseitigen Stirnfläche der Scheibe 1 bilden. Wenn nun ein Messerblatt 3 gegen ein Hindernis in Form eines harten Gegenstandes schlägt, kann es sich um den Bolzen 4 entgegen der Mährichtung verschwenken, da zwischen dem Spannloch 11 des Messerblatts 3 und dem Ansatz des Bolzens 4 ein ein solches Verschwenken zulassendes Spiel vorhanden ist. Aufgrund der Neigung des Messerblatts gleitet dieses über das Hindernis, wodurch der Messerkopf entsprechend angehoben wird. Anschließend nimmt das Messerblatt 3 unter der Wirkung der Zentrifugalkraft wieder seine ursprüngliche, zur Rasenoberfläche parallele Lage ein, um diese exakt zu schneiden.

Das Messerblatt 3 mit dem mit Durchbrechungen 8 versehen Transportabschnitt 6 erzeugt im Bereich des Schneidabschnitts 9 einen Auftrieb und im Bereich des Transportabschnitts 6 einen Rotations- bzw. Transportstrom. Aufgrund dieser beiden Luftströme sind die Grashalme beim Schneiden aufgerichtet, werden von außen in den Schneidbereich angesaugt und werden in den Sammelbehälter des Rasenmähers transportiert und dort zusammengedrückt, wobei gleichzeitig Gegenstände von der Rasenoberfläche abgesaugt werden.

**Ansprüche**

1. Messerkopf für einen Rasenmäher
   - mit einer eine rasenseitige und eine mäherseitige Stirnfläche aufweisenden Scheibe (1), die koaxial mit einer Antriebswelle des Rasenmähers verbindbar ist, deren Achse sich senkrecht zu der mäherseitigen Stirnfläche der Scheibe (1) erstreckt,
   - mit an der rasenseitigen Stirnfläche der Scheibe (1) diametral gegenüberliegend vorgesehenen Spannflächen (2) und
   - mit wenigstens zwei Messerblättern (3), von denen jedes eine in Drehrichtung der Scheibe (1) vordere Schneide (7) und einen ihr gegenüberliegenden Rücken aufweist und die mit ihren diametral gegenüberliegenden radial innen befindlichen Enden an den Spannflächen (2) festlegbar sind,

   dadurch **gekennzeichnet,** daß die diametral gegenüberliegenden Spannflächen (2) entgegengesetzt zueinander jeweils bezüglich der Ebene der rasenseitigen Stirnfläche der Scheibe (1) so geneigt (α) sind, daß die parallel zu den Spannflächen (2) festgelegten Messerblätter (3) mit ihren Schneiden (7) von der Ebene der mäherseitigen Stirnfläche der Scheibe (1) weiter entfernt liegen als mit ihren Rücken.

2. Messerkopf nach Anspruch 1, dadurch **gekennzeichnet,** daß die diametral gegenüberliegenden Spannflächen (2) entgegengesetzt zueinander jeweils um einen Winkel (α) von 5° bis 20° zur Ebene der messerseitigen Stirnfläche der Scheibe (1) geneigt sind.

3. Messerkopf nach Anspruch 1 oder 2, dadurch **gekennzeichnet,** daß die Messerblätter (3) an ihren radial außen liegenden Förderabschnitten (6) jeweils zwischen ihrer Schneide (7) und ihrem Rücken zur Ebene der mäherseitigen Stirnfläche der Scheibe (1) hin abgebogen (12) sind und daß die Förderabschnitte (6) mit einer Vielzahl von Durchbrechungen (8) versehen sind.

4. Messerkopf nach Anspruch 3, dadurch **gekennzeichnet,** daß der Winkel zwischen dem Schneidabschnitt (9) eines Messerblatts (3) und seinem Förderabschnitt (6) 110° bis 150°, vorzugsweise 130° beträgt.

5. Messerkopf nach einem der vorhergehenden Ansprüche, dadurch **gekennzeichnet,** daß in den Spannflächen (2) senkrecht zu ihren Ebenen Gewindebohrungen ausgebildet sind, in welche sich mit Spiel durch Spannlöcher (11) in den Messerblättern (3) erstreckende Gewindebolzen (4) zur Festlegung der Messerblätter (3) eingeschraubt sind.

6. Messerkopf nach Anspruch 5, dadurch **gekennzeichnet,** daß das Spiel zwischen Bolzen (4) und Messerblatt (3) axial und/oder radial

vorgesehen ist.

Fig. 1

Fig. 2

Fig. 3

Fig.4

Fig.5

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | EP-A-0 244 041 (MULTINORM) <br> * Seite 5, Zeile 26 - Seite 6, Zeile 22; Figuren 3, 4 * <br> — — — | 1,2,5,6,3,4 | A 01 <br> D 34/73 |
| Y | GB-A-2 040 153 (LUISA FEDELI) <br> * das ganze Dokument * <br> — — — | 3,4 | |
| A | US-A-3 320 733 (KIRK) <br> * Spalte 1, Zeile 50 - Spalte 2, Zeile 63; Figuren 1-3 * <br> — — — | 1,3,4,6 | |
| A | US-A-3 643 409 (JONES) <br> * Spalte 2, Zeile 69 - Spalte 3, Zeile 38; Figuren 1-3 * <br> — — — | 1,2,5,6 | |
| A | US-A-3 662 530 (HENRIKSEN) <br> * Spalte 1, Zeile 54 - Spalte 2, Zeile 24; Figuren 1-4 * <br> — — — | 1,2 | |
| A | FR-A-2 072 365 (MASSEY-FERGUSON SERVICES) <br> * Seite 2, Zeile 15 - Seite 3, Zeile 9; Figuren 1-4 * <br> — — — | 1,5,6 | |
| A | FR-A-2 385 318 (C.VAN DER LELY) <br> * Seite 10, Zeilen 6 - 24; Figur 8 * <br> — — — | 1 | |
| A | DE-A-3 140 836 (WOLF-GERÄTE) <br> * das ganze Dokument * <br> — — — | 3,4 | RECHERCHIERTE SACHGEBIETE (Int. Cl.5) <br><br> A 01 D |
| A | US-A-2 889 677 (WOOD) <br> — — — | | |
| A | AU-A-3 157 477 (VICTA) <br> — — — — — | | |

Der vorliegende Recherchenbericht wurde für alle Patentansprüche erstellt

| Recherchenort | Abschlußdatum der Recherche | Prüfer |
|---|---|---|
| Den Haag | 08 März 91 | WILLIAMS M.J. |